# EUROPÄISCHE PATENTSCHRIFT

(11) **EP 0 623 494 B1**
(45) Veröffentlichungstag und Bekanntmachung des Hinweises auf die Patenterteilung: **18.06.1997**
(21) Anmeldenummer: 94103277.3
(22) Anmeldetag: 04.03.1994
(51) Int. Cl.: B60R 21/34, G08G 1/16

(54) **Kraftfahrzeug mit Rückfahrsicherung**
Motor vehicle with reverse travel security device
Véhicule à moteur avec système de sécurité pour la marche-arrière

(30) Priorität: 09.03.1993 DE 9303338 U
(43) Veröffentlichungstag der Anmeldung: 09.11.1994
(73) Patentinhaber: Baatsch, Siegfried, D-45356 Essen (DE); Gerard, Ralf, D-45359 Essen (DE)
(72) Erfinder: Baatsch, Siegfried, D-45356 Essen (DE); Gerard, Ralf, D-45359 Essen (DE)
(74) Vertreter: Schulte, Jörg, Dipl.-Ing.

(56) Entgegenhaltungen:
- DE-A- 3 728 948
- DE-A- 3 918 998
- DE-A- 4 208 065

## Beschreibung

Die Erfindung betrifft ein Kraftfahrzeug mit einer Überwachungsvorrichtung für den Fahrzeugrückraum, die einen das Abschalten des Antriebsmotors bewirkenden Schaltkreis mit einem integrierten Fühler und zugleich eine die Funktion des Fühlers überwachende und den Aktionsbereich des Kraftfahrzeuges bei Ausfall des Fühlers einschränkende Schaltung aufweist.

Eine derartige Überwachungsvorrichtung ist aus der DE-A-39 18 998 bekannt. Bei dieser bekannten Rückfahrsicherung wird am Fabrzeugheck insbesondere an Lastkraftwagen ein Infrarotsensor angebracht, der mittels eines Stromkreises mit einem Relais verbunden ist, das ein Motorstoprelais dann ansteuert, weg sich ein Verkehrsteilnehmer oder ein Hindernis im Meßbereich des Infrarotsensors befindet. Der Wagen wird dementsprechend sofort abgeschaltet, so daß das Fahrzeug zum Stillstand kommt. Gleichzeitig wird die Funktionstüchtigkeit des Infrarotsensors überwacht, indem in die Versorungsleitung des Infrarotsensors ein Überwachungs- und Schaltrelais integriert ist, das beim Ansprechen eine Drehzahlbegrenzung des Antriebmotors bewirkt. Dabei hängt die Funktionstüchtigkeit neben einer genauen Positionierung des Infrarotsensors die Funktionstüchtigkeit nicht zuletzt von der Straßenbeschaffenheit und den sonstigen Gegenbeiten ab.

Der Erfindung liegt daher die Aufgabe zugrunde, eine den unterschiedlichen Gegebenheiten beim Rangierbetrieb von Kraftfahrzeugen genügende und auch bei starken Erschütterungen sichernde Rückfahrsicherung für Kraftfahrzeuge zu schaffen.

Die Aufgabe wird gemäß der Erfindung durch die im Anspruch 1 genannten Merkmale gelöst.

Mit Hilfe eines derartigen Reflextasters, opto-elektronischen Näherungsschalters oder Ultrarotsensors ist es möglich, auch bei Kraftfahrzeugen, die sich auf der Straße und in sonstigen Bereichen bewegen, eine einwandfreie Oberwachung auch des Heckbereiches zu gewährleisten. Diese besagten "Fühler" sind durch ihre besondere Ausbildung gegen Stoß und Erschütterung so weit abgesichert, daß sie immer eine einwandfreie Identifikation des Rückraumbereiches ermöglichen und zwar in der Regel bis in einen Bereich von 2 bis 5 m. Damit ist sichergestellt, daß bei einem derartigen Kraftfahrzeug ein rechtzeitiger Stop erfolgt, wenn sich im Heckbereich eine Person oder ein Hindernis, beispielsweise ein Baum befindet. Ohne daß eine Person mitgehen und mitüberwachen muß, kann so der Kraftfahrzeugführer durch den Reflextaster bzw. Ultrarotsensor den von ihm nicht einzusehenden Bereich hinter dem Heck des Fahrzeuges genau überwachen bzw. dieser wird automatisch überwacht. Vorteilhaft ist dabei vor allem auch, daß der Reflextaster selbst auf Funktionsbereitschaft überwacht werden kann, so daß sich der Fahrzeugführer auch auf die am Heckbereich angeordnete Überwachungsvorrichtung voll verlassen kann. Würde nämlich die Überwachungsvorrichtung, d.h. der Reflextaster ausfallen, würde automatisch beispielsweise das Ladebord blockiert, wobei selbstverständlich im Führerhaus ein Blinklicht o.ä. tätig wird, so daß der Fahrzeugführer nicht mehr in der Lage ist, mit diesen Zubehörteilen zu arbeiten, so daß er dann gezwungen wird, eine Reparaturwerkstatt anzufahren, was er kann, weil über die sichernde Schaltung lediglich eines dieser Zubehörteile bzw. Zusatzeinrichtungen ausgeschaltet und blockiert ist. Da der Schwellwert des Reflextasters überwacht wird, ist eine einfache und sichere Funktionsüberprüfung möglich. Das von dem angestrahlten Verkehrsteilnehmer oder Gegenstand zurückgeworfene Ultrarotlicht wird im Reflextaster bzw. opto-elektronischen Näherungsschalter gefiltert und in eine elektrische Spannung umgewandelt. Bei Überschreiten eines vorgegebenen Schwellwertes wird dann der Schaltausgang des Reflextasters betätigt und der Antriebsmotor entsprechend ausgeschaltet. Kommt es erst gar nicht mehr zu einem solchen Schwellwert, d.h. liegt keine Spannung mehr am Gerät an, so erfolgt automatisch die beschriebene Notausschaltung.

Da mit derartigen Reflextastern bzw. opto-elektronischen Näherungsschaltern die Menge des zurückgeworfenen Ultrarotlichtes gemessen wird bzw. gemessen werden kann, kann ein derartiger Taster quasi die Art des Gegenstandes bzw. Reflektors erkennen, so daß es beispielsweise auch denkbar ist, beim Reflektieren von Ultrarotlicht über einen Verkehrsteilnehmer eine frühere Abschaltung, d.h. einen niedrigeren Schwellwert vorzugeben, als beispielsweise bei einer Hauswand oder einem Baum.

Nach einer zweckmäßigen Ausbildung der Erfindung ist vorgesehen, daß neben einem oder mehreren der Reflextaster ein oder mehrere Infrarotsensoren oder Ultraschallsensoren am Fahrzeugheck angeordnet sind. Diese Ausbildung hat den Vorteil, daß zweierlei Techniken zum Einsatz kommen, so daß auf jeden Fall eine Technik wirksam ist, so daß die Betriebssicherheit wesentlich erhöht wird. Zweckmäßigerweise wird die Schaltung dann so ausgebildet, daß sie beide, d.h. Reflextaster und Infrarotsensor oder Ultraschallsensor überwacht und erst dann anspricht und schaltet, wenn beide Fühler ausgefallen sind. Statt des Infrarotsensors oder Ultraschallsensors ist auch der Einsatz von Mikrowellen denkbar, über die vorteilhafterweise insbesondere auch dicht hinter dem Fahrzeugheck stehende Personen sicher ermittelt werden können. Darüber hinaus ist es möglich, durch Verwendung von zwei Arten, natürlich aber auch bei Verwendung einer Art von Taster, jeweils zwei so anzuordnen, daß der Bereich, der besonders gefährdet ist, durch die einander kreuzenden Informationsfelder überprüft wird.

Eine weitere zweckmäßige Ausbildung sieht vor, daß die Schaltung als fail-safe-Schaltung ausgeführt ist. Damit ist eine Ausfallsicherung zur sicheren Seite geschaffen, wobei insbesondere beim Abzug der Schalter bzw. der Stecker bzw. ein Riß des Zuleitungskabels der Schalter automatisch öffnet oder schaltet und entsprechend die Funktionsüberprüfung tätig wird.

Um den Überwachungsbereich den jeweiligen Gegebenheiten optimal anpassen zu können, sieht die Erfindung vor, daß der Reflextaster und/oder der Infrarotsensor verschwenkbar am Fahrzeugheck angeordnet sind. Damit können die Reflextaster bzw. Infrarotsensoren oder auch die anderen Fühler jeweils so eingestellt werden, daß der besonders gefährdete oder der aus anderen Gründen zu überwachende Bereich wirksam überwacht wird. Denkbar ist es dabei beispielsweise auch, einen Reflextaster oder Infrarotsensor quasi senkrecht am Heck abwärts überwachend anzuordnen, um so diesen Bereich besonders abzusichern. Ein Reflextaster oder Infrarotsensor kann dabei gleichzeitig auch eine Art Diebstahlssicherung sein, indem beim Stillstand des Antriebsmotors der durch den Reflextaster ausgelöste Impuls auf eine Sirene o.ä. geschaltet wird, um auf diese Art und Weise zumindest den Zugriff zum Ladegut zu erschweren. Weiter ist es denkbar, auf diese Art und Weise die Ladebühne o.ä. Zusatzteile am Heck zu überwachen und auf diese Art und Weise sicherzustellen, daß gewisse Funktionen dann blockiert sind, wenn sich eine Person im Gefahrenbereich befindet.

Die Wirksamkeit der Reflextaster oder sonstigen Fühler kann weiter dadurch optimiert werden, daß der Reflextaster einen Schwenkantrieb aufweist, der programmgesteuert ausgebildet ist. Der Reflextaster wird somit während des Rückwärtsfahrens nicht nur einen festen Bereich überwachen, sondern einen darüberhinausgehenden, jeweils durch das Programm vorher genau vorgebbaren Bereich. Auf diese Weise wird die Sicherheitsfunktion weiter optimiert, ohne daß der Installationsaufwand dadurch wesentlich vergrößert wird.

Fehler an der Überwachungsvorrichtung werden weiter dadurch ausgeschlossen, daß die Leitungen des Reflextasters, des Infrarotsensors und der Schaltung mit vergossenen Steckern ausgerüstet sind. Dadurch ist eine wirksame Verbindung durch die Stecker gewährleistet und zwar auf Dauer, da die entsprechenden Kontakte eingebunden bzw. eingegossen sind. Auch die Reflextaster als solche sind innen vollständig vergossen, so daß eine hohe Schutzart und die gewünschte und notwendige große Vibrationsfestigkeit gegeben ist. Die Taster als solche arbeiten verschleißfrei und können auch durch witterungsgegebene Umstände nicht in ihrer Wirksamkeit beeinflußt werden. Die vollvergossene Elektronik und die besondere Ausbildung der Optik vermeiden Störungen während des Dauereinsatzes.

Zur weiteren Erhöhung der Betriebssicherheit sieht die Erfindung vor, daß die Infrarotsensoren oder Ultraschallsensoren durch Lichtschranken ersetzt oder ergänzt eingesetzt sind. Denkbar ist es demgemäß, die Reflextaster mit Lichtschranken in Kombination einzusetzen oder mit Infrarotsensoren oder mit Ultraschallsensoren oder aber sogar in Dreierkombination, also beispielsweise Reflextaster, Infrarotsensoren und Lichtschranken. Denkbar ist es auch, beispielsweise die Erfassung des jeweiligen Hindernisses den einzelnen Aggregaten zuzuordnen, die Auslösung des jeweiligen Signals dagegen einer gemeinsamen Einrichtung, so daß dadurch der Installationsaufwand geringgehalten werden kann. Selbst in einer derartigen Kombination wird durch die Aufteilung auf die einzelnen unterschiedlich ausgebildeten Fühler die Betriebssicherheit wesentlich verbessert.

Weiter vorn ist bereits darauf hingewiesen worden, daß die einzelnen Fühler unter verhältnismäßig rauhen Umweltbedingungen arbeiten müssen. Bezüglich der Vibrationsfestigkeit wird mit einer vergossenen Elektronik gearbeitet, bezüglich der optischen Eigenschaften mit entsprechender Sicherung der Blenden und sonstigen optischen Teile, bezüglich der Klimafestigkeit mit entsprechender Versiegelung des Gehäuses durch O-Ringe, so daß auch bei ungünstigen Witterungsverhältnissen ein einwandfreier Betrieb immer gegeben ist. Vorteilhafterweise ist darüber hinaus vorgesehen, die Empfindlichkeit des Gerätes einstellbar auszubilden, was dadurch erreicht wird, daß der Reflextaster mit einem Potentiometer ausgerüstet ist. Dadurch kann die Ansprechempfindlichkeit genau eingestellt werden. Denkbar ist es, zusätzlich Verstärker für die Reflextaster einzusetzen, wodurch sowohl die Reichweite wie die Empfindlichkeit erhöht werden kann.

Die Erfindung zeichnet sich insbesondere dadurch aus, daß eine Überwachungsvorrichtung für Kraftfahrzeuge, insbesondere Postfahrzeuge, Müllfahrzeuge, Zulieferfahrzeuge für Lebensmittelläden u.ä. geschaffen ist, die den gesamten Heckbereich über drei und mehr Meter nach hinten so weit absichert, daß Gefährdungen für Dritte, aber auch für mitfahrende Personen ausgeschlossen werden kann. Sollte sich eine solche Person oder sollte sich ein Gegenstand in diesem Bereich befinden, würde der Reflextaster und/oder das zugeordnete Überwachungsgerät sofort einen Schaltimpuls erzeugen, über den der Antriebsmotor ausgeschaltet oder so weit gebremst wird, daß ein weiteres Rückwärtsverfahren nicht mehr möglich ist. Zusätzlich wird der Reflextaster, der mit einem getakteten Ultrarotsender und einem auf die Sendefrequenz abgestimmten Empfänger arbeitet, über den Schwellwert bzw. die entsprechende Spannung überwacht, so daß die Überwachungsvorrichtung sich selbst bezüglich ihrer Funktionsbereitschaft überwacht. Vorteilhaft ist bei einer kombinierten Anordnung und einer verschwenkbaren Anordnung, daß damit der Überwachungsbereich insbesondere durch entsprechende Schnittpunkte so abgesichert ist, daß selbst auf dem Boden liegende Personen oder Gegenstände sicher miterfaßt werden können.

Weitere Einzelheiten und Vorteile des Gegenstandes der Erfindung ergeben sich aus der nachfolgenden Beschreibung der zugehörigen Zeichnung, in der bevorzugte Ausführungsbeispiele mit den dazu notwendigen Einzelheiten und Einzelteilen dargestellt sind. Es zeigen:
- Fig. 1: ein Kraftfahrzeug mit rückwärtsgerichteten unterschiedlichen Fühlern,
- Fig. 2: das Kraftfahrzeug gemäß Fig. 1 mit Mehrfachfühlern und Lichtschranke,
- Fig. 3: einen Reflextaster in perspektivischer Darstellung mit Halterung,
- Fig. 4: eine andere Ausbildung der Halterung,
- Fig. 5: einen Reflextaster mit Potentiometer und
- Fig. 6: die unterschiedliche Ausbildung der Tastbereiche der zum Einsatz kommenden Reflextaster.

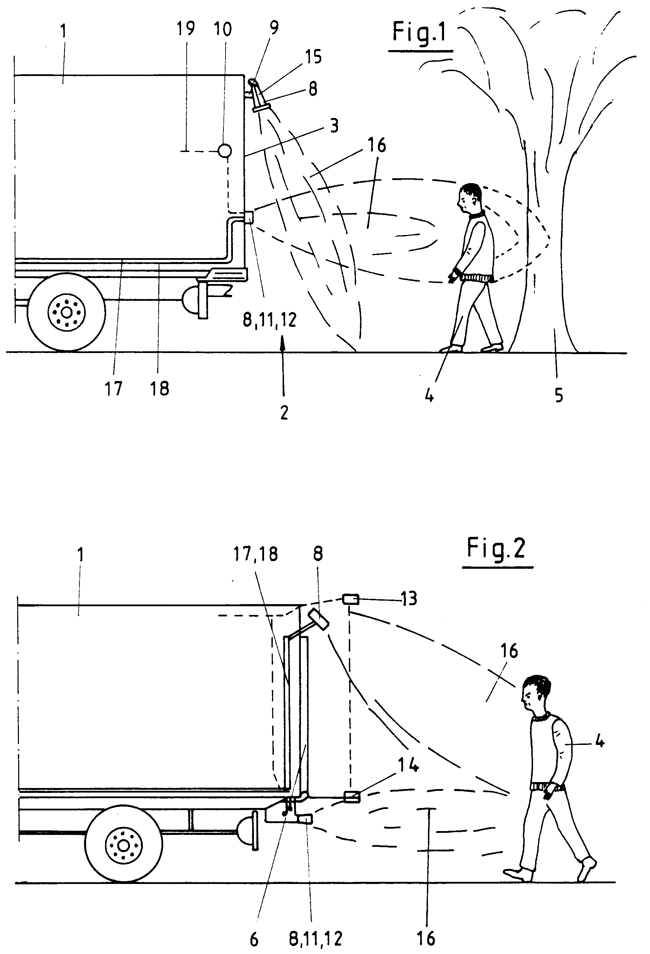

Bei dem in Fig. 1 teilweise wiedergegebenen Kraftfahrzeug (1) handelt es sich um einen Lastkraftwagen, der hier beispielsweise in eine Parklücke einparkt und dabei über die Überwachungsvorrichtung (2), die am Fahrzeugheck (3) angebracht ist, auf einen in diesem Bereich befindliche Verkehrsteilnehmer (4) aufmerksam gemacht wird. Hierbei wird aber der Fahrzeugführer, der hier nicht dargestellt ist, nicht nur auf dem Verkehrsteilnehmer (4) aufmerksam gemacht, sondern vielmehr wird über die Überwachungsvorrichtung (2) der Antriebsmotor abgeschaltet. Hierzu ist die Überwachungsvorrichtung (2), die ja aus dem Reflextaster (8) sowie Infrarotsensoren (11) und Ultraschallsensoren (12) besteht, über die Leitungen (17, 18) mit dem Antriebsmotor verbunden, so daß bei Erreichen eines bestimmten Schwellwertes automatisch die Abschaltung des Antriebsmotors erfolgen kann.

Fig. 1 ist zu entnehmen, daß die einzelnen Reflextaster (8), die über eine Halterung (9) schwenkbar am Fahrzeugheck (3) angebracht sind, in eine entsprechende Lage gebracht bzw. verschwenkt werden können, um sowohl ein horizontales Sichtfeld (16) wie auch ein annähernd senkrechtes Sichtfeld (16) zu erzeugen. Damit wird es möglich, dicht hinter dem Kraftfahrzeug (1) befindliche Verkehrsteilnehmer (4) wie auch beispielsweise in einiger Entfernung stehende Bäume (5) zu ermitteln, wobei dann über den Reflextaster (8) die Abschaltung des Antriebsmotors (9) bewirkt wird.

Über die Schaltung (10) erfolgt eine Kontrolle des jeweiligen Reflextasters (8) bzw. Infrarotsensors (11) bzw. Ultraschallsensors (12). Sollte die entsprechende Spannung im Reflextaster (8) nicht anliegen bzw. nicht ermittelt werden, so würde über die Schaltung (10) beispielsweise eine Blockierung des Ladebords (6) erfolgen, das dann in einer Position ist, die es dem Fahrzeugführer unmöglich macht, mit dem Kraftfahrzeug (1) weitere Arbeiten durchzuführen. Er wird dann vielmehr gezwungen, wegen der ausgefallenen Überwachungsvorrichtung (2) sofort eine Werkstatt anzufahren, ohne daß er direkt daran gehindert wird, das Kraftfahrzeug (1) weiter zu verfahren. Die entsprechende Ausrüstung bzw. Einrichtung ist Fig. 2 zu entnehmen, wo auch das Ladebord (6) wiedergegeben ist. Fig. 2 ist dabei weiter zu entnehmen, daß zur Absicherung insbesondere des unmittelbaren Nachbarbereiches zum Kraftfahrzeug (1) Lichtschranken (13, 14) eingesetzt sind, die den Bereich senkrecht zum Fahrzeugheck (3) bzw. zum Ladebord (6) überwacht. Würde sich die Figur bzw. der Verkehrsteilnehmer (4), der hier das Kraftfahrzeug (1) einweist, zu dicht an das Kraftfahrzeug (1) heranbewegen oder umgekehrt das Kraftfahrzeug (1) an ihn, so würde spätestens die Lichtschranke (13) einen sofortigen Stillstand des Kraftfahrzeuges (1) bewirken, während die beiden Sichtfelder (16) beispielsweise dazu dienen, den Kraftfahrzeugführer vorzuwarnen. Die Beschreibung und die Fig. 1 und 2 verdeutlichen die Vielseitigkeit der Überwachungsvorrichtung (2) aber auch ihre absolute Betriebssicherheit, die durch die Doppelfunktionsausübung absolut gesichert ist.

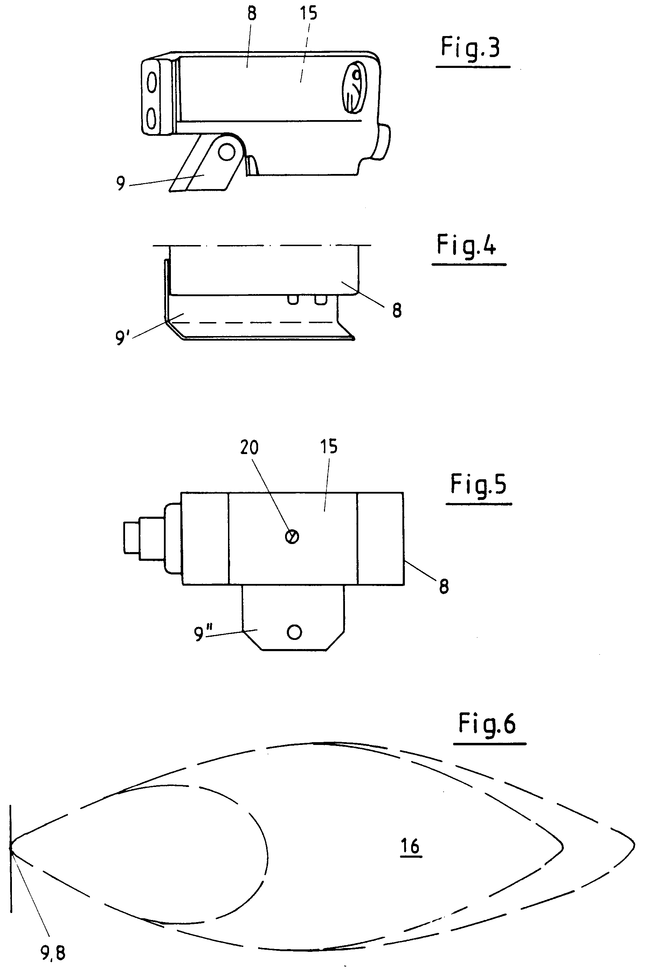

Die Fig. 3 bis 5 zeigen unterschiedliche Ausbildungen des Reflextasters (8) bzw. der ihm zugeordneten Halterung (9), wobei Fig. 3 eine einer kameraähnliche Halterung (9) wiedergibt, während Fig. 4 eine U-förmige Halterung (9') zeigt und Fig. 5 eine Art Steckhalterung (9'').

Fig. 5 zeigt weiter ein im Mittelbereich des Reflextasters (8) angeordnetes Potentiometer (15), über dessen Verstellschraube (20) sowohl die Empfindlichkeit wie auch die Ansprechweite des Reflextasters (8) verändert bzw. angepaßt werden kann. Mit (19) ist übrigens die Überwachungsleitung angesprochen, über die die Schaltung (10) verfügt, um ggf. bei Ausfall des Reflextasters (8), des Infrarotsensors (11) oder des Ultraschallsensors (12) auch ein optisches Signal im Führerhaus anzusprechen, um auf diese Art und Weise den Fahrzeugführer zusätzlich auf die bestehenden Probleme aufmerksam machen zu können.

Fig. 6 verdeutlicht, wie durch Betätigen der Verstellschraube (20) des Potentiometers (15) die Größe des Sichtfeldes (16) des Reflextasters (8) verändert werden kann.

## Patentansprüche

1. Kraftfahrzeug (1) mit einer Überwachungsvorrichtung (2) für den Fahrzeugrückraum, die einen das Abschalten des Antriebmotors bewirkenden Schaltkreis (8, 11-12; 17-18) mit einem integrierten Fühler (8, 11-12) und zugleich eine die Funktion des Fühlers (8, 11-12) überwachende und den Aktionsbereich des Kraftfahrzeuges (1) bei Ausfall des Fühlers (8, 11-12) einschränkende Schaltung (10) aufweist,
**dadurch gekennzeichnet,**
daß der Fühler (8) ein als optoelektronischer Näherungsschalter ausgebildeter Reflextaster (8) ist und die Schaltung (10) eine Spannung im Reflextaster (8) im Hinblick auf einen Schwellwert überwacht und bei nichtanliegender oder nicht ermittelbarer entsprechender Spannung eine Zubehörhydraulik oder -mechanik des Kraftfahrzeuges (1) vorzugsweise die eines Ladebords (6), blockiert.

2. Kraftfahrzeug nach Anspruch 1,
**dadurch gekennzeichnet,**
daß neben einem oder mehreren der Reflextaster (8) ein oder mehrere Infrarotsensoren (11) oder Ultraschallsensoren (12) am Fahrzeugheck (3) angeordnet sind.

3. Kraftfahrzeug nach Anspruch 1,
**dadurch gekennzeichnet,**
daß die Schaltung (10) als fail-safe-Schaltung ausgeführt ist.

4. Kraftfahrzeug nach Anspruch 1,
**dadurch gekennzeichnet,**
daß der Reflextaster (8) und/oder der Infrarotsensor (11) verschwenkbar am Fahrzeugheck (3) angeordnet sind.

5. Kraftfahrzeug nach Anspruch 1,
**dadurch gekennzeichnet,**
daß die Leitungen des Reflextasters (8), des Infrarotsensors (11) und der Schaltung (10) mit vergossenen Steckern ausgerüstet sind.

6. Kraftfahrzeug nach Anspruch 4,
**dadurch gekennzeichnet,**
daß der Reflextaster (8) einen Schwenkantrieb aufweist, der programmgesteuert ausgebildet ist.

7. Kraftfahrzeug nach Anspruch 1 bis Anspruch 6,
**dadurch gekennzeichnet,**
daß die Infrarotsensoren (11) oder Ultraschallsensoren (12) durch Lichtschranken (13, 14) ersetzt oder ergänzt eingesetzt sind.

8. Kraftfahrzeug nach Anspruch 1,
**dadurch gekennzeichnet,**
daß der Reflextaster (8) mit einem Potentiometer (15) ausgerüstet ist.

## Claims

1. Motor vehicle (1) with a monitoring device (2) for the rear of the vehicle, which device comprises a switching circuit for switching off the drive motor with an integrated sensor (8, 11-12) and also a circuit (10) monitoring the function of the sensor (8, 11-12, 17-18) and restricting the range of action of the motor vehicle (1) if the sensor (8, 11-12) fails, **characterised in that** the sensor (8) is a reflex sensor (8) designed as an optoelectronic proximity switch, and the circuit (10) monitors voltage in the reflex sensor (8) with respect to a threshold value and, when the voltage is not close or cannot be determined it blocks an accessory hydraulic or mechanical system of the motor vehicle (1), preferably that of a loading platform (6).

2. Motor vehicle according to claim 1, **characterised in that** one or a plurality of infrared sensors (11) or ultrasonic sensors (12) are disposed on the tail (3) of the vehicle next to one or several of the reflex sensors (8).

3. Motor vehicle according to claim 1, **characterised in that** the circuit (10) is designed as a fail-safe circuit.

4. Motor vehicle according to claim 1, **characterised in that** the reflex sensor (8) and/or the infrared sensor (11) are pivotable on the tail (3) of the vehicle.

5. Motor vehicle according to claim 1, **characterised in that** the lines of the reflex sensor (8), the infrared sensor (11) and the circuit (10) are fitted with moulded plugs.

6. Motor vehicle according to claim 4, **characterised in that** the reflex sensor (8) has a pivot drive which is of a program-controlled type.

7. Motor vehicle according to claim 1 to 6, **characterised in that** the infrared sensors (11) or ultrasonic sensors (12) are replaced by or supplemented by photoelectric barriers (13, 14).

8. Motor vehicle according to claim 1, **characterised in that** the reflex sensor (8) is fitted with a potentiometer (15).

## Revendications

1. Véhicule automobile (1) comprenant un dispositif (2) de surveillance pour l'espace arrière du véhicule, dispositif qui présente un circuit de commutation (8, 11, 12; 17, 18) provoquant l'arrêt du moteur d'entraînement et comprenant un capteur intégré (8, 11, 12), et qui présente en même temps un circuit (10) surveillant le fonctionnement du capteur (8, 11, 12) et limitant la zone d'action du véhicule (1) lors d'une défaillance du capteur (8, 11-12), caractérisé en ce que le capteur (8) comprend un récepteur réflexe (8) réalisé sous la forme d'un commutateur de proximité électrooptique, et le circuit (10) surveille une tension dans le récepteur réflexe (8) par rapport à une valeur de seuil et bloque, dans le cas d'une tension non appliquée ou d'une tension ne pouvant pas être détectée comme adéquate, l'hydraulique des accessoires ou la mécanique des accessoires du véhicule (1), de préférence celle d'une plateforme (6) de chargement.

2. Véhicule selon la revendication 1, caractérisé en ce qu'à côté d'un ou de plusieurs des récepteurs (8) réflexe, un ou plusieurs capteurs infrarouge (11) ou capteurs ultrasons (12) sont agencés sur l'arrière (3) du véhicule.

3. Véhicule selon la revendication 1, caractérisé en ce que le circuit (10) est réalisé sous la forme d'un circuit à sécurité intégré.

4. Véhicule selon la revendication 1, caractérisé en ce que le récepteur réflexe (8) et/ou le capteur infrarouge (11) sont agencés de manière pivotante sur l'arrière (3) du véhicule.

5. Véhicule selon la revendication 1, caractérisé en ce que les lignes électriques du récepteur réflexe (8), du capteur infrarouge (11) et du circuit (10) sont équipés de fiches encapsulées.

6. Véhicule selon la revendication 4, caractérisé en ce que le récepteur réflexe (8) présente un dispositif d'entraînement en pivotement qui est réalisé sous une forme commandable par un programme.

7. Véhicule selon la revendication 1 à la revendication 6, caractérisé en ce que les capteurs infrarouge (11) ou les capteurs ultrasons (12) sont utilisés, remplacés ou complétés par des barrières photo-électriques (13, 14).

8. Véhicule selon la revendication 1, caractérisé en ce que le récepteur réflexe (8) est équipé d'un potentiomètre (15).
